(19) **Europäisches Patentamt / European Patent Office / Office européen des brevets**

(11) **EP 4 019 573 A1**

(12) **EUROPEAN PATENT APPLICATION**

(43) Date of publication:
**29.06.2022 Bulletin 2022/26**

(21) Application number: **20000487.7**

(22) Date of filing: **23.12.2020**

(51) International Patent Classification (IPC):
**C08J 9/00** (2006.01)  **C08F 210/06** (2006.01)
**C08J 9/14** (2006.01)

(52) Cooperative Patent Classification (CPC):
(C-Sets available)
**C08J 9/0066; C08F 210/06; C08J 9/141;**
C08F 4/65912; C08J 2203/14; C08J 2323/14
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
• **Duchateau, Rob**
**6160 GA Geleen (NL)**
• **Jasinska-Walc, Lidia**
**6160 GA Geleen (NL)**
• **Bouyahyi, Miloud**
**6160 GA Geleen (NL)**
• **Badillo, Nydia**
**6160 GA Geleen (NL)**
• **Kruszynski, Jakub**
**6160 GA Geleen (NL)**
• **Liu, Yingxin**
**6160 GA Geleen (NL)**
• **Degenhart, Peter**
**6160 GA Geleen (NL)**
• **Yang, Lanti**
**6160 GA Geleen (NL)**
• **Troisi, Enrico**
**6160 GA Geleen (NL)**
• **Kleppinger, Ralf**
**6160 GA Geleen (NL)**

(74) Representative: **Sabic Intellectual Property Group**
**Sabic Intellectual Property Department**
**P.O. Box 3008**
**6160 GA Geleen (NL)**

(54) **FOAMABLE HYDROXYL-FUNCTIONALIZED OLEFIN RESIN**

(57) The present invention relates to a foamable hydroxyl-functionalized polyolefin resin comprising at least an olefin, a hydroxyl-functional olefin comonomer and a binding agents.

**Figure 1**

**(Cont. next page)**

EP 4 019 573 A1

(52) Cooperative Patent Classification (CPC): (Cont.)

C-Sets
**C08F 10/06, C08F 4/65927;**
**C08F 210/06, C08F 4/64193;**
C08F 210/06, C08F 210/14, C08F 216/04,
C08F 2500/27, C08F 2500/34;
C08F 210/06, C08F 216/04, C08F 2500/27,
C08F 2500/34

**Description**

**TECHNICAL FIELD OF THE INVENTION**

The present invention relates to a foamable hydroxyl-functionalized polyolefin resin and its use in foamed article.

**TECHNOLOGICAL BACKGROUND OF THE INVENTION**

Polymer foams are used in numerous application fields such as packaging, building & construction and the automotive industry. Thermoplastic foams are mainly based on polyurethane (PU), polyvinyl chloride (PVC), polystyrene (PS) and low density polyethylene (LDPE). These foams are easily produced via injection molding-, extrusion- or bead foaming processes.
However, they have certain limitations. PU, PVC and PS foams have clear sustainability issues and PVC and PS have a limited heat deflection temperature limiting the service temperature of these foams.
Polyolefin foams have received wide interest from the industry due to their low material costs, low density, chemical resistance, sustainability and recyclability.
Especially, PP foam is interesting for its high stiffness, good impact strength and relatively high heat deflection temperature.
However, foaming of conventional linear polyolefins is limited due to its semi-crystalline nature and low melt strength, which results in poor cell nucleation and cell coalescence, leading to nonuniform foam structures with a high open-cell content.
Extrusion foaming is typically not possible for a conventional linear polyolefins and beat foaming requires for example a propylene copolymer to create sufficient melt strength for the expanded bead formation close to the melting point.
Several strategies have been developed:

-   Adding large amount of fillers such as clay and carbon fibers that function as nucleating agents.
-   Introducing long chain branches, or cross-links, for example by using peroxide in combination with a diene during extrusion step or an electron-beam process.
-   Blending the polyolefin with another polymer that is not a polyolefin.

However, such approaches have the following drawback:
All of those approaches require a multi-step process, which is time consuming, less reliable and more expensive.
Therefore, there is a need for a new low cost polyolefin resin suitable for foaming applications, which does not require blending with another polyolefin, long chain branching, cross-linking nor the addition of fillers.

SUMMARY

This object is achieved by the present invention. Accordingly, the present invention relates to a foamable composition comprising at least:

A first monomer which is an olefin preferably propylene and/or ethylene, preferably from 75 - wt% to 99.5 wt% of the total amount of monomer within the composition;
Optionally a second olefin, preferably from 0 to 20 wt% of the total amount of monomer within the composition;
A hydroxyl-functionalized olefin comonomer preferably from 0.1 to 5.0 wt%, preferably 0.2 to 5.0 wt%, more preferably 0.2 to 4.0 wt% of the total amount of monomer within the composition; and
a binding agent

Advantageously, the binding agent is selected from the list comprising metal hydroxides, metal oxides, metal carbonates, metal nitrates, metal phosphates, metal sulphates, and metal silicates or their partially hydroxylated or hydrated products, preferably metal from the groups 1, 2, 12 or 13 of the periodic table, more preferably aluminum oxide hydroxide $Al_2O_{3-x}(OH)_{2x}$, where x = 0 - 3.
Advantageously, the hydroxyl-functionalized olefin comonomer is a C3-C11 alpha olefin monomer with one or multiple OH functional groups, preferably 3-buten-1-ol or 5-hexen-1-ol, or wherein the hydroxyl-functionalized olefin comonomer is a C5-C11 cyclic olefin, preferably 5-norbornene-2-ol, 5-norbornene-2-methanol, 5-norbornene-2,3-dimethanol.
Advantageously, the composition comprises a third olefin monomer selected from the list comprising C2-C11 alpha olefin monomers or C5-C11 cyclic olefin monomers.
Advantageously, the binding agent is aluminum oxide and/or hydroxide, $[Al_2O_{3-x}(OH)_{2x}]$ where x = 0 - 3).
Advantageously, the amount of binding agent is from 0.4 wt% to 30 wt%, preferably 0.8 wt% to 20 wt%, more preferably 1.2 wt% to 15 wt% of the composition.

A second aspect of the invention is a foamable hydroxyl-functionalized polyolefin resin comprising an ethylene- or propylene-based copolymer or a terpolymer, with pending hydroxyl functional groups in which preferably the amount of hydroxyl functionalities within the resin is from 0,1 to 2.5 mol% -as determined by comparing the $^1$H NMR integral of the $CH_2OH$ next to the hydroxyl with respect to the other $CH_2$ groups or CH groups in the polymer- and a binding agent preferably selected from the list comprising metal hydroxides, metal oxides, metal carbonates, metal nitrates, metal phosphates, metal sulphates, and metal silicates or their partially hydroxylated or hydrated products, preferably metal is from the groups 1, 2, 12 or 13 of the periodic table, more preferably the binding agent is aluminum oxide hydroxide $Al_2O_{3-x}(OH)_{2x}$, where x = 0 - 3.

Advantageously, the resin has been produced by a solution process in which a metal alkyl-based protective agent has been used, wherein the binding agent within the composition is a metal residues from the metal alkyl-based protective agent.

A third aspect of the invention is a foamed article comprising a polymerized foamable composition according to the invention or a foamable hydroxyl-functionalized polyolefin resin according to the invention.

Another aspect of the invention is a blend of isotactic polypropylene or a blend of random polypropylene or a blend of high density polyethylene (HDPE) or a blend of linear low density polyethylene (LLDPE), with foamable composition according to the invention or a foamable hydroxyl-functionalized polyolefin resin according to the invention.

A final aspect of the invention is the use of a foamable composition according to the invention or a foamable hydroxyl-functionalized polyolefin resin according to t the invention for the making of a foamed article.

## BRIEF DESCRIPTION OF THE DRAWINGS

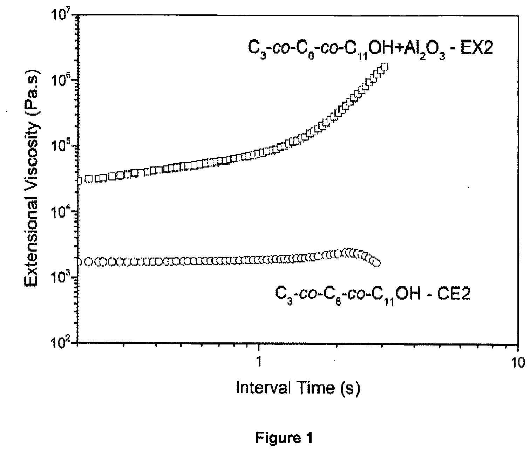

- Figures 1 illustrates extensional viscosity of the PP-OH containing aluminum oxide hydroxide, [$Al_2O_{3-x}(OH)_{2x}$] where x = 0 - 3) and purified PP-OH samples (PURE).

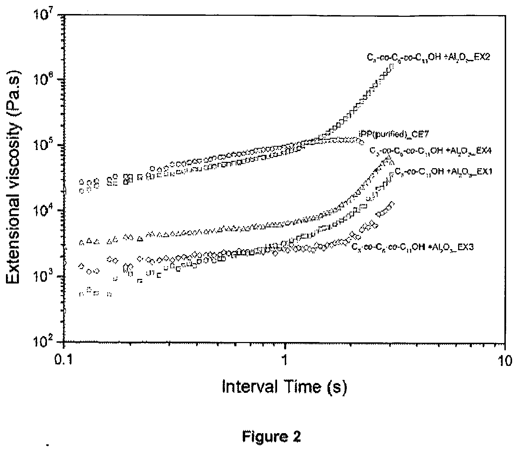

- Figure 2 illustrates extensional viscosity of the hydroxyl-functionalized PP containing aluminum oxide hydroxide, [$Al_2O_{3-x}(OH)_{2x}$] where x = 0 - 3).
- Figure 3a and 3b illustrates SEM image of the foam based on hydroxyl-functionalized PP of example EX5 at x250 and x1100 magnification, respectively.

## DETAILED DESCRIPTION

The inventors surprisingly discovered a foamable olefin based composition comprising at least a first monomer, which is an olefin, a hydroxyl-functionalized olefin comonomer and a binding agent.

Indeed, the inventors found that hydroxyl-functionalized polyolefins compositions, in particular hydroxyl-functionalized polypropylene, can form polar hydrogen-bonded nests with reversible H-bonds, ionomers or a combination of both and provide thermoreversible and/or dynamic crosslink networks, enhancing the melt strength of the polymer.

A similar behavior can be observed with polyolefins having a polar functionality capable of forming either hydrogen bonds or ionic interactions, such as, but not limited to alcohol, carboxylic acid, primary/secondary amine, thiol, boronic acid, sulfonic acid, sulfonate, phosphate, phosphonate functionalities.

The network is thermoreversible and/or dynamic and can be strengthened by incorporating several binding agents including but not limited to metal hydroxides, metal oxides, metal carbonates, metal nitrates, metal phosphates, metal sulphates, and metal silicates or their partially hydroxylated or hydrated products that help to enhance the polar interactions of the hetero atom-containing functionalities of the polyolefins to create a material with improved melt strength.

This provides a very versatile route to a wide variety of dynamic and/or thermoreversible network systems with enhanced melt strength that can be easily foamed in a broad and tunable temperature window.

Thus prepared foams are expected to consist of well-defined uniform 3D closed cell structures. These materials can be extrusion foamed affording foamed products having densities below 100 kg/m$^3$.

Advantageously, different chemical compositions of hydroxyl functionalities and binding agent and post polymerization treatments will retain the network structure up to different temperatures allowing to have a large range of process temperature.

### Binding agents

Binding agents, according to the invention are compounds which help to enhance the polar interactions of the hetero atom-containing functionalities of the polyolefins-preferably the hetero atom is oxygen-to create a material with an improved melt strength.

The binding agents may be selected but not limited to metal hydroxides, metal oxides, metal carbonates, metal nitrates, metal phosphates, metal sulphates, and metal silicates or their partially hydroxylated or hydrated products, preferably the metal is from the groups 1, 2, 12 or 13 of the periodic table, more preferably aluminum.

In a preferred embodiment, the binding agent is aluminum oxide hydroxide, $Al_2O_{3-x}(OH)_{2x}$ where x = 0 - 3.

In an embodiment the amount of binding agent is from 0.4 wt% to 30 wt%, preferably 0.8 wt% to 20 wt%, more preferably 1.2 wt% to 15 wt% of the composition, leading to an atomic metal content within the composition, between 0.2 to 8 wt%, preferably 0.3 - 4 wt%, more preferably 0.4 - 3.5 wt%, more preferably the atomic metal content is aluminum (Al).

First olefin monomer

In an embodiment, the at least one first olefin monomer is selected from the group consisting of ethylene, propylene, 1-butene, 3-methyl-1-butene, 1-pentene, 4-methyl-1-pentene, 1-hexene, vinyl cyclohexane, 1-octene, norbornene, vinylidene-norbornene and ethylidene-norbornene. Preferably the first olefin monomer is propylene and/or ethylene, preferably from 75 - wt% to 99.5 wt% of the total amount of monomer within the composition.

Optional second olefin

In an embodiment, a second optional olefin can be add to the composition, preferably from 0 to 20 wt% of the total amount of monomer within the composition. The second olefin monomer is different from the first monomer and selected from the group consisting of ethylene, propylene, 1-butene, 3-methyl-1-butene, 1-pentene, 4-methyl-1-pentene, 1-hexene, vinyl cyclohexane, 1-octene, norbornene, vinylidene-norbornene and ethylidene-norbornene.

In an embodiment, the first olefin is propylene or ethylene and the second olefin is 1-hexene, 1-octene or norbornene, or the first olefin is propylene and the second olefin is ethylene.

**Hydroxyl-functionalized olefin comonomer**

In an embodiment, the hydroxyl-functionalized olefin monomers is selected from the group comprising: allyl alcohol, 3-buten-1-ol, 3-buten-2-ol, 3-buten-1,2-diol, 5-hexene-1-ol, 5-hexene-1,2-diol, 7-octen-1-ol, 7-octen-1,2-diol, 9-decen-1-ol, 10-undecene-1-ol, 5-norbornene-2-ol, 5-norbornene-2-methanol and 5-norbornene-2,3-dimethanol,

In an embodiment, the amount of hydroxyl-functionalized olefin comonomer within the composition may be from 0.1 to 5.0 wt%, preferably 0.2 to 5.0 wt%, more preferably 0.2 to 4.0 wt%.

**Foamable hydroxyl-functionalized polyolefin resin**

A foamable hydroxyl-functionalized polyolefin resin according to the invention may be produced according to WO 2019/122458 A1, by the catalytic copolymerization of first olefin monomer, (optionally with a second monomer) with a protected hydroxyl-functional olefin comonomer that is protected by a metal alkyl-based protective agent, preferably an aluminum alkyl-pacified alkenol, e.g. 5-hexen-1-ol, to produce the random copolymer containing aluminum alkyl-pacified hydroxyl functionalities. Exposing this product to water in-situ provides the foamable polyolefin material. The polymerization is preferably performed using a high temperature solution polymerization process, however, it can be done in a slurry process.

The protected hydroxyl-functionalized olefin comonomer can be obtained by reacting a hydroxyl-functionalized olefin monomer with an aluminum trialkyl, where the aluminum trialkyl is selected from the group comprising: triethyl aluminum, triisobutyl aluminum, trihexyl aluminum, trioctyl aluminum, or with a dialkyl aluminum alkoxide, $R^1OAl(R^2)_2$ where $R^1$ = methyl, ethyl, n-propyl, isopropyl, n-butyl, isobutyl, tert-butyl, cyclohexyl and $R^2$ = ethyl, isobutyl, n-hexyl, n-octyl.

In an embodiment the foamable hydroxyl-functionalized polyolefin resin is a copolymer or a terpolymer with a binding agent.

In an embodiment a foamable hydroxyl-functionalized copolymer is obtained, preferably a copolymer in which the first monomer is selected from the group comprising ethylene and propylene and the second monomer is selected from the group comprising 3-buten-1-ol, 5-hexen-1-ol and 5-norbornene-2-methanol, more preferably the hydroxyl-functionalized copolymer is poly(propylene-*co*-5-hexen-1-ol), poly(ethylene-co-5-hexen-1-ol), poly(propylene-*co*-3-buten-1-ol), poly(ethylene-co-3-buten-1-ol) or poly(ethylene-*co*-5-norbornene-2-methanol).

In an embodiment a foamable hydroxyl-functionalized terpolymer is obtained, preferably a terpolymer in which the first monomer is selected from the group comprising ethylene and propylene, the second monomer is selected from the group comprising propylene, 1-butene, 1-hexene, 1-octene and norbornene and the third monomer is selected from the group comprising 3-buten-1-ol, 5-hexen-1-ol and 5-norbornene-2-methanol, more preferably the hydroxyl-functionalized terpolymer is poly(propyleno-*co*-ethylone-*co*-5-hexen-1-ol), poly(propylene-*co*-1-butene-*co*-5-hexen-1-ol), poly(propylene-*co*-1-hexene-*co*-5-hexen-1-ol), poly(ethylene-*co*-norbornene-*co*-5-hexen-1-ol), poly(ethylene-*co*-1-octene-*co*-5-hexen-1-ol), poly(propylene-*co*-ethylene-*co*-3-buten-1-ol), poly(propylene-*co*-1-butene-*co*-3-buten-1-ol), poly(propylene-co-1-hexene-*co*-3-buten-1-ol), poly(ethylene-*co*-1-octene-*co*-3-buten-1-ol), poly(ethylene-*co*-norbornene-*co*-3-buten-1-ol) or poly(ethylene-*co*-norbornene-*co*-5-norbornene-2-methanol).

In another embodiment, the foamable hydroxyl-functionalized polyolefin resin can be obtained by reactive extrusion, in particular by grafting a substrate containing a hydroxyl functionality to an olefin polymer, copolymer or terpolymer.

A way to obtain such hydroxyl-functionalized polyolefin resin is by treating the polyolefin resin with maleic anhydride and a peroxide to produce a maleic anhydride-grafted polyolefin.

This process has been described by S.B. Brown, in Reactive Extrusion, New York, 1992 and uses a radical initiator in order to graft the polar functionalized group onto the polyolefin. Subsequently, this maleic anhydride-grafted polyolefin is treated with a hydroxyalkanoamine, preferably ethanolamine, to produce the corresponding hydroxyl-functionalized polyolefin.

To form the foamable polyolefin resin, before to be extruded, the hydroxyl-functionalized polyolefin is mixed with the binding agent or its precursor, for example an aluminum alkyl that becomes an aluminum oxide hydroxide.

**Examples**

The invention is now elucidated by way of the following non-limiting examples.

*Measurements*

Size exclusion chromatography (SEC).

Prior to SEC analysis, the samples listed in Table 1 were purified according to the method detailed in the experimental section. The SEC measurements were performed at 150 °C on a Polymer Char GPC-IR® built around an Agilent GC oven model 7890, equipped with an auto-sampler and the Integrated Detector IR4, 1,2-Dichlorobenzene (o-DCB) was used as an eluent at a flow rate of 1 mL/min. The data were processed using Calculations Software GPC One®. The molecular weights were calculated with respect to polyethylene or polystyrene standards.

Liquid-state $^1$H NMR.

$^1$H NMR and $^{13}$C NMR spectra were recorded at 80 °C using a Varian Mercury Vx spectrometer operating at Larmor frequencies of 400 MHz and 100.62 MHz for $^1$H and $^{13}$C, respectively. For $^1$H NMR experiments, the spectral width was 6402.0 Hz, acquisition time 1.998 s and the number of recorded scans equal to 64. $^{13}$C NMR spectra were recorded with a spectral width of 24154.6 Hz, an acquisition time of 1.3 s, and 256 scans.

The amount of OH-groups was measured by liquid-state $^1$H NMR based on the integral the $CH_2$ group signal next to the OH compared to the integral of the other $CH_2$ or CH groups in the polymer.

Differential scanning calorimetry (DSC).

Melting ($T_m$) and crystallization ($T_c$) temperatures as well as enthalpies of the transitions were measured using a Differential Scanning Calorimeter Q100 from TA Instruments. The measurements were carried out at a heating and cooling rate of 10 °C/min from -40 °C to 230 °C. The transitions were deduced from the second heating and cooling curves.

Scanning electron microscopy (SEM).

The morphology of foam cell structures was characterized with a JEOL JSM 7800-F Field Emission Scanning Electron Microscopy (FE-SEM) at an operating voltage of 5 kV. A piece of foam sample was cryogenically fractured for the cross-sectional morphology characterization. The foam cross section was examined using the Large Depth of Focus (LDF) mode and the Lower Electron Detector (LED) detector in the FE-SEM. The LDF mode provides a larger depth of focus than conventional SEM mode and is suitable for imaging of rough samples with micron size features. All the samples were sputter-coated with gold-palladium before SEM imaging in order to reduce the surface charging during imaging.

Density analysis

Density analysis were carried out using PLT-A01 set for density determination for KERN PLT. The foam samples were immersed in water to determine the volume and the mass by weighing it on the balance. The volume determination is based on the Law of Archimedes.

Compression-molding experiments.

All the sample plaques were prepared via compression-molding of the injection-molded bars using PP ISO settings on LabEcon 600 high-temperature press (Fontijne Presses, the Netherlands). Namely, the injection-molded bars were cut in pieces and loaded into a stainless-steel mold $5 \times 5 \times 0.16$ cm with aluminum foil or Teflon covering on either side. Then, the compression-molding cycle was applied: heating to 210 °C, stabilizing for 5 min with no force applied, 5 min with 100 kN normal force and cooling down to 40 °C with 15 °C/min and 100 kN normal force.

Uniaxial extensional measurements

Uniaxial extensional measurements were performed with a Modular Compact Rheometer MCR 502 Anton Paar equipped with a CTD 620 oven. Measuring system: SER2. Shaft cooling: 1 $m^3$N/h. Heating: 0.75 $m^3$N/h and 0 LN/h. Samples prepared in reactive extrusion followed by injection molding were cut in rectangular shape ($1.7 \times 1.1 \times 0.15$ cm) with parallel razor blades. The elongational viscosity was evaluated under several Hencky strain rates between 0,05/s and 0,5/s. The Hencky strain was kept constant at 3.5 by adjusting the interval duration time.

Inductively coupled plasma mass spectrometry analysis (ICP-MS)

The atomic aluminum content (wt%) was determined using ICP-MS : 100 - 200 mg of sample is digested in 6 mL concentrated nitric acid (trace metal grade) by microwave assisted acid digestion using an Anton Paar Multiwave PRO equipped with closed high pressure Quartz digestion vessels. After the microwave digestion run, the acid is analytically transferred into a pre-cleaned plastic centrifuge tube containing 1 mL of internal standard solution and is diluted with Milli-Q water up to the 50 mL mark. The aluminum in the samples is quantified using multi-element calibration standards from Inorganic Ventures. The aluminum is detected and measured using an Agilent 8900 ICP-MS system by measuring the aluminum at the 27 m/z Isotope in (High Energy) Helium Collision mode.

Example 1 Poly($C_3$-*co*-$C_{11}$OH)-unpurified (EX1).

Poly(propylene-*co*-10-undecen-1-ol) (poly($C_3$-*co*-$C_{11}$OH)) was produced using *rac*-Me$_2$Si(2-Me-4-Ph-Ind)$_2$ZrCl$_2$/MAO as the catalyst system. Catalyst and comonomer solutions were prepared in a glove box under an inert dry nitrogen atmosphere. In a stainless steel BÜCHI reactor (20 L) heated up to 80 °C filled with heptane diluent (15 L) and continuously stirred (500 rpm), triisobutylaluminum (TiBA; 1.0 M solution in toluene, 20 mL) and TiBA-pacified 10-undecen-1-ol (1.0 M solution in toluene, TiBA:10-undecen-1-ol (mol ratio) = 1, 150 mL) were added. The reactor was charged at 80 °C with gaseous propylene (920 g) resulting in a partial propylene pressure of 6 bar. The polymerization reaction was initiated by the injection of the pre-activated catalyst precursor *rac*-Me$_2$Si(2-Me-4-Ph-Ind)$_2$ZrCl$_2$ (6.4 mg, 10.2 $\mu$mol) in MAO (30 wt % solution in toluene, 0.13 mol). The reaction was stopped by pouring the polymer solution into a container flask containing demineralized water/iPrOH (50wt%, 3 L) and Irganox 1010 (1.0 M, 2 mmol). The resulting suspension was filtered and dried at 80 °C in a vacuum oven. The poly(propylene-co-10-undecen-1-ol) (1.6 kg) was obtained as a white powder and was analyzed using the analytical methods detailed above.

Example 2 Poly($C_3$-*co*-$C_6$-*co*-$C_{11}$OH)-unpurified (EX2).

The same polymerization and work-up procedure as described in example 1 was applied to produce poly(propylene-*co*-1-hexene-*co*-10-undecen-1-ol) (poly($C_3$-*co*-$C_6$-*co*-$C_{11}$OH)) using *rac*-Me$_2$Si(2-Me-4-Ph-Ind)$_2$ZrCl$_2$/MAO as the catalyst system (Zr = 0.8 $\mu$mol, MAO = 0.45 mol), 1-hexene (neat, 30 mL) which was injected along with TiBA scavenger (1.0 M solution in toluene, 30 mL) and TiBA-pacified 10-undecen-1-ol comonomer solution (1.0 M solution in toluene,TiBA:10-undecen-1-ol (mol ratio) = 1; 50 mL). After filtration and drying, the poly(propylene-*co*-1-hexene-*co*-10-undecen-1-ol) product was isolated as a white powder (410 g) and was analyzed using the analytical methods detailed above.

Example 3Poly(C$_3$-*co*-C$_6$-*co*-C$_{11}$OH)-unpurified (EX3).

The same polymerization and work-up procedure as described in example 1 was applied to produce poly(propylene-*co*-1-hexene-*co*-10-undecen-1-ol) (poly(C$_3$-*co*-C$_6$-*co*-C$_{11}$OH)) using *rac*-Me$_2$Si(2-Me-4-Ph-Ind)$_2$ZrCl$_2$/MAO as the catalyst system (Zr = 1.6 μmol, MAO = 0.22 mol), 1-hexene (neat, 30 mL), which was injected along with TiBA scavenger (1.0 M solution in toluene, 30 mL) and TiBA-pacified 10-undecen-1-ol comonomer solution (1.0 M solution in toluene,TiBA:10-undecen-1-ol (mol ratio) = 1; 30 mL). After filtration and drying, the poly(propylene-*co*-1-hexene-*co*-10-undecen-1-ol) product was isolated as a white powder (1.05 kg) and was analyzed using the analytical methods detailed above.

Example 4 Poly(C$_3$-*co*-C$_6$-*co*-C$_{11}$OH)-unpurified (EX4).

The same polymerization and work-up procedure as described in example 1 was applied to produce poly(propylene-*co*-1-hexene-*co*-10-undecen-1-ol) (poly(C$_3$-*co*-C$_6$-*co*-C$_{11}$OH)) using *rac*-Me$_2$Si(2-Me-4-Ph-Ind)$_2$ZrCl$_2$/MAO as the catalyst system (Zr = 1.6 μmol, MAO = 0.22 mol), 1-hexene (neat, 13 mL), which was injected along with TiBA scavenger (1.0 M solution in toluene, 30 mL) and TiBA-pacified 10-undecen-1-ol comonomer solution (1.0 M solution in toluene, TiBA:10-undecen-1-ol (mol ratio) = 1; 30 mL). After filtration and drying, the poly(propylene-*co*-1-hexene-*co*-10-undecen-1-ol) product was isolated as a white powder (0,75 kg) and was analyzed using the analytical methods detailed above.

Example 5 PolyC$_3$-*co*-C$_6$OH)-unpurified (EX5).

The polymerization experiment was carried out using a stainless steel BÜCHI reactor (2 L) filled with pentamethylheptane (PMH) solvent (1 L) using a stirring speed of 600 rpm. Catalyst and comonomer solutions were prepared in a glove box under an inert dry nitrogen atmosphere.

The reactor was first heated to 40 °C followed by the addition of TiBA (1.0 M solution in toluene, 2 mL) and triethylaluminum (TEA)-pacified 5-hexen-1-ol (1.0 M solution in toluene, TEA:5-hexen-1-ol (mol ratio) = 1, 10 mL). The reactor was charged at 40 °C with gaseous propylene (100 g) and the reactor was heated up to the desired polymerization temperature of 130 °C resulting in a partial propylene pressure of about 15 bar. Once the set temperature was reached, the polymerization reaction was initiated by the injection of the pre-activated catalyst precursor bis((2-oxoyl-3-(dibenzo-1H-pyrrole-1-yl)-5-(methyl)phenyl)-2-phenoxy)-2,4-pentanediylhafnium (IV) dimethyl [CAS 958665-18-4]; other name hafnium [[2',2"'-[(1,3-dimethyl-1,3-propanediyl)bis(oxy-κO)]bis[3-(9H-carbazol-9-y))-5-methy)[1,1'-biphenyl]-2-olato-κO]](2-)]dimethyl] (Hf-O4, 0.75 μmol) in MAO (30 wt % solution in toluene, 11.2 mmol). The reaction was stopped by pouring the polymer solution into a container flask containing demineralized water/iPrOH (50 wt%, 1 L) and Irganox 1010 (1.0 M, 2 mmol). The resulting suspension was filtered and dried at 80 °C in a vacuum oven. The poly(propylene-*co*-5-hexen-1-ol) (poly(C$_3$-*co*-C$_6$OH), 19.6 g) was obtained as a white powder and was analyzed using the analytical methods detailed above.

Example 6 Poly(C$_3$-*co*-C$_6$-*co*-C$_6$OH)-unpurified (EX6).

The same polymerization and work-up procedure as described in example 5 was applied to produce poly(propylene-*co*-1-hexene-*co*-5-hexen-1-ol) (poly(C$_3$-*co*-C$_6$-*co*-C$_6$OH)) using Hf-O4/MAO as the catalyst system (Hf-O4 = 0.75 μmol, MAO = 11.2 mmol), 1-hexene (neat, 5 mL), which was injected along with TiBA scavenger (1.0 M solution in toluene, 2 mL) and TEA-pacified 5-hexene-1-ol comonomer solution (1.0 M solution in toluene, TEA:5-hexene-1-ol (mol ratio) = 1; 10 mL). The resulting hydroxyl-functionalized poly(propylene-co-1-hexene-co-5-hexen-1-ol) (10.1 g) was obtained as a white powder and was analyzed using the analytical methods detailed above.

Example 7 isotactic Polypropylene-unpurified (EX7).

In a stainless steel BÜCHI reactor (20 L) heated up to 80 °C filled with heptane diluent (15 L) and continuously stirred (500 rpm), *isotactic* poly(propylene) homopolymer was produced using *rac*-Me$_2$Si(2-Me-4-Ph-Ind)$_2$ZrCl$_2$/MAO as the catalyst system (Zr = 1.2 μmol, MAO = 22.5 mmol), and TiBA scavenger (1.0 M solution in toluene, 10 mL). After filtration and drying, the *isotactic* polypropylene product was isolated as a white powder (0.27 kg) and was analyzed using the analytical methods detailed above.

Example 8 Poly(C$_3$-*co*-C$_6$)-unpurified (EX8).

In a stainless steel BÜCHI reactor (2 L) filled with pentamethylheptane (PMH) solvent (1.5 L) and a stirring speed of 600 rpm, the same polymerization procedure as described in example 1 was applied to produce poly(propylene-*co*-1-hexene) (poly(C$_3$-*co*-C$_6$)) using *rac*-Me$_2$Si(2-Me-4-Ph-Ind)$_2$ZrCl$_2$/MAO as the catalyst system (Zr = 0.32 μmol, MAO = 1 mmol), 1-hexene (neat, 15 mL) which was injected along with TiBA scavenger (1.0 M solution in toluene, 2 mL). After filtration and drying the poly(propylene-*co*-1-hexene) product was isolated as a white powder (81 g) and was analyzed using the analytical methods detailed above.

Example 9 Poly(C$_3$-*co*-C$_{12}$)-unpurified (EX9).

In a stainless steel BÜCHI reactor (2 L) filled with pentamethylheptane (PMH) solvent (1.5 L) and a stirring speed of 600 rpm, the same polymerization and work-up procedure as described in example 1 was applied to produce poly(propylene-*co*-1-dodecene) using *rac*-Me$_2$Si(2-Me-4-Ph-Ind)$_2$ZrCl$_2$/MAO as the catalyst system (Zr = 0.24 μmol, MAO = 3.4 mmol), 1-dodecene (neat, 71.6 mL) which was injected along with TiBA scavenger (1.0 M solution in toluene, 2 mL). After filtration and drying the poly(propylene-*co*-1-dodecene) (poly(C$_3$-*co*-C$_{12}$)) product was isolated as a white powder (83 g) and was analyzed using the analytical methods detailed above.

Example 10 Poly(C$_3$-*co*-C$_6$-*co*-C$_{12}$)-unpurified (EX10).

In a stainless steel BUCHI reactor (2 L) filled with pentamethylheptane (PMH) solvent (1.5 L) and a stirring speed of 600 rpm, the same polymerization and work-up procedure as described in example 1 was applied to produce poly(propylene-*co*-1-hexene-*co*-1-dodecene) using *rac*-Me$_2$Si(2-Me-4-Ph-Ind)$_2$ZrCl$_2$/MAO as the catalyst system (Zr = 0.24 μmol, MAO = 3.4 mmol), 1-hexene (neat, 40 mL), 1-dodecene (neat, 4.4 mL), which were injected along with TiBA scavenger (1.0 M solution in toluene, 2 mL). After filtration and drying, the poly(propylene-*co*-1-hexene-*co*-1-dodecene) (poly(C$_3$-*co*-C$_6$-*co*-C$_{12}$)) product was isolated as a white powder (62 g) and was analyzed using the analytical methods detailed above.

Comparative examples.

Respective comparative examples (CE1 to CE10) have been obtained from example 1 - 10 in which the aluminum species have been removed from the polymer according to the purification process described below.

Purification of the polymer samples,

The unpurified polymer sample obtained from example 1 - 10 were dissolved in 500 mL of dry toluene under N$_2$ flow at 100 °C. Subsequently, to the polymer solution 10 mL of aqueous 1M HCl solution was added. The mixture was stirred for 1h at 100 °C. The purified polymer was recovered by precipitation in cold methanol, washed three times with demineralized water and dried in under reduced pressure at 80 °C for 24 h.

**Table 1.** Molecular and thermal analysis of the hydroxyl-functionalized polyolefins.

| EX | Composition | OH group [mol%] | $M_n$ [kg/mol] | $T_m$ [°C] | ΔH [J/g] | Al content [wt%] |
|---|---|---|---|---|---|---|
| EX1 | poly(C$_3$-*co*-C$_{11}$OH) -unpurified | 0.20 | 53,6 | 148.7 | 83.2 | 0,4 |
| EX2 | poly(C$_3$-*co*-C$_6$-*co*-C$_{11}$OH) - unpurified | 0,13 | 92.5 | 131.4 | 60.5 | 2.4 |
| EX3 | poly(C$_3$-*co*-C$_6$-*co*-C$_{11}$OH) -unpurified | 0.30 | 75.5 | 119.0 | 47.5 | 0.6 |
| EX4 | poly(C$_3$-*co*-C$_6$-*co*-C$_{11}$OH) -unpurified | 0,12 | 93.5 | 143.5 | 67.3 | 0.8 |
| EX5 | poly(C$_3$-*co*-C$_6$OH) -unpurified | 0.34 | 44.1 | 144.9 | 65.0 | 2.3 |
| EX6 | poly(C$_3$-*co*-C$_6$-*co*-C$_6$OH) -unpurified | 0.32 | 44,5 | 134.2 | 58.2 | 3.5 |
| | | | | | | |
| EX7 | iPP - unpurified | 0 | 74.2 | 155.4 | 105.8 | 0.12 |
| EX8 | poly(C$_3$-*co*-C$_6$) - unpurified | 0 | 49.0 | 124.9 | 71.2 | 0.09 |

(continued)

| EX | Composition | OH group [mol%] | $M_n$ [kg/mol] | $T_m$ [°C] | $\Delta H$ [J/g] | Al content [wt%] |
|---|---|---|---|---|---|---|
| EX9 | poly($C_3$-co-$C_{12}$) - unpurified | 0 | 33.2 | 96.3 | 46.4 | 0.13 |
| EX10 | poly($C_3$-co-$C_6$-co-$C_{12}$) -unpurified | 0 | 40.1 | 94.0 | 45.9 | 0.15 |
| | | | | | | |
| CE1 | poly($C_3$-co-$C_{11}$OH) (purified) | 0.20 | 53.6 | 148.7 | 83.2 | <0.05 |
| CE2 | poly($C_3$-co-$C_6$-co-$C_{11}$OH) (purified) | 0.13 | 92.5 | 131.4 | 60.5 | <0.05 |
| CE3 | poly($C_3$-co-$C_6$-co-$C_{11}$OH) (purified) | 0.30 | 75.5 | 119.0 | 47.5 | <0.05 |
| CE4 | poly($C_3$-co-$C_6$-co-$C_{11}$OH) (purified) | 0.12 | 93.5 | 143.5 | 67.3 | <0.05 |
| CE5 | poly($C_3$-co-$C_6$OH) (purified) | 0.34 | 44.1 | 144.9 | 65.0 | <0.05 |
| CE6 | poly($C_3$-co-$C_6$-co-$C_6$OH) (purified) | 0.32 | 44.5 | 134.2 | 58.2 | <0.05 |
| | | | | | | |
| CE7 | iPP (purified) | 0 | 41.9 | 154.5 | 106.3 | <0.05 |
| CE8 | poly($C_3$-co-$C_6$) (purified) | 0 | 49.0 | 124.9 | 71.2 | <0.05 |
| CE9 | poly($C_3$-co-$C_{12}$) (purified) | 0 | 33.2 | 96.3 | 46.4 | <0.05 |
| CE10 | poly($C_3$-co-$C_6$-co-$C_{12}$) (purified) | 0 | 40.1 | 94.0 | 45.9 | <0.05 |
| The examples and comparative examples have been foamed according to the process under. | | | | | | |

Procedure of foams preparation using the MCU (micro foaming line).

Polymers and additives (Polybatch FPE50T Talcum in PE 50% MB (cell-nucleator) and Atmer 7300 (cell-stabilizer)) were fed into a twin-screw extruder. Polymers were dosed using a volumetric screw feeder with a speed of 15 rpm, providing a throughput 290 g/h. Isobutane was used as a blowing agent and was injected using a syringe pump at 0.85 ml/min, which correlates to a gas dosage of 10.3 wt%, An adjustable die was connected at the exit of the cooler. At the starting point of the experiment the temperature of the cooler was set at was 200 °C and was lowered every 5 min in steps of 5 °C. The pressure was controlled during the process and set at 30 bars by the adjustable die.

Result of the foaming

According to the prior art and in particular Ind. Eng. Chem. Res. 2016, 55, 11970-11982, when the transient elongational viscosity is illustrated as the changes of elongational time under certain Hencky strain rates, the sudden increase in elongational viscosity above the linear viscoelastic predictions is named the strain hardening property, which were demonstrated for different polymer with LCB. It should be mentioned that this strain hardening property is extremely significant for actual processing process such as foaming, high speed fiber spinning, and blowing molding, where the high melt strength is needed.

EX1 poly($C_3$-co-$C_{11}$OH) with 0,4 wt% Al has a melt strength of $3.72 \cdot 10^4$ Pa·s and is foamable.
EX2 poly($C_3$-co-$C_6$-co-$C_{11}$OH) with 2.4 wt% Al has a melt strength of $1.64 \cdot 10^6$ Pa·s and is foamable.
EX3 poly($C_3$-co-$C_6$-co-$C_{11}$OH) with 0.6 wt% Al has a melt strength of $1.31.10^4$ Pa·s and is foamable,
EX4 poly($C_3$-co-$C_6$-co-$C_{11}$OH) with 0.8 wt% Al has a melt strength of $5.54.10^4$ Pa·s and is foamable.
CE2 poly($C_3$-co-$C_6$-co-$C_{11}$OH) purified has a melt strength of $2.48.10^3$ Pa·s and is not foamable CE7 homo-PP (iPP) purified has a melt strength of $1.2.10^5$ Pa·s and is not foamable

The changes of the viscosities of the selected samples are presented below:

* $$\Delta\eta_{EX1} = 37207\text{-}292 = 36915 \text{ Pa·s } (127\cdot10^2 \text{ \%}).$$

* $$\Delta\eta_{EX2} = 1640000\text{-}11758 = 1.628.242 \text{ Pa·s } (139\cdot10^2 \text{ \%}).$$

* $$\Delta\eta_{EX3} = 66162\text{-}2631 = 63531 \text{ Pa·s } (24\cdot10^2 \text{ \%}).$$

* $$\Delta\eta_{EX4} = 66162\text{-}2580 = 63582 \text{ Pa·s } (25\cdot10^2 \text{ \%}).$$

* $$\Delta\eta_{CE2} = 1736\text{-}1700 = 1.628.242 \text{ Pa·s } (2.1 \text{ \%}).$$

* $$\Delta\eta_{CE7} = 125680\text{-}13303 = 112377 \text{ Pa·s } (8\cdot10^2 \text{ \%}).$$

**General results.**

Examples 1 - 6, containing borh hydroxyl functionalities and a binding agent are well-foamable due to the presence of a combination of polar functional groups in the polymer, in this case hydroxyl functionalities, and a binding agent, in this case an aluminum oxide hydroxide that enhances the physical/reversible crosslink network and increaces the melt strength.

Examples 7 - 10, which do not contain any functionality, are not foamable despite the fact that they contain some binding agent.

Examples CE 1 - 10 do not contain any functionality nor binding agent and are not foamable. This last result is in agreement with the general knowledge cited above that unfunctionalized polypropylenes are not foamable.

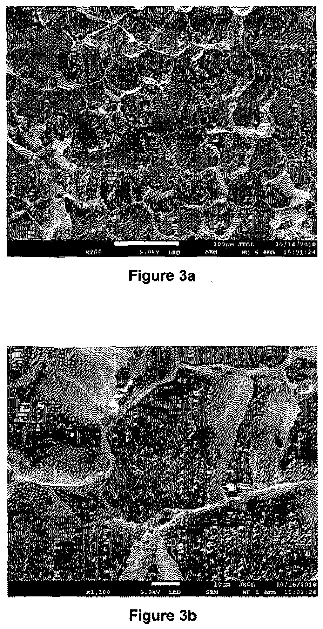

It is the combination of the hydroxyl functionalities and the binding agents that provide an improved melt strength suitable for the polyolefin to be foamed as showed by Figure 3a and 3b. It can be seen that a high cell nucleation and cell coalescence with high close cells content is obtained for the material of Example 5.

**Claims**

1. Foamable composition comprising at least:

   - A first monomer which is an olefin preferably propylene and/or ethylene, preferably from 75 - wt% to 99.5 wt% of the total amount of monomer within the composition;
   - Optionally a second olefin, preferably from 0 to 20 wt% of the total amount of monomer within the composition;
   - A hydroxyl-functionalized olefin comonomer preferably from 0.1 to 5.0 wt%, preferably 0.2 to 5.0 wt% more preferably 0.2 to 4.0 wt% of the total amount of monomer within the composition; and
   - A binding agent

2. Foamable composition according to claim 1 wherein the binding agent is selected from the list comprising metal hydroxides, metal oxides, metal carbonates, metal nitrates, metal phosphates, metal sulphates, and metal silicates or their partially hydroxylated or hydrated products, preferably metal from the groups 1, 2, 12 or 13 of the periodic table, more preferably aluminum oxide hydroxide $Al_2O_{3\text{-}x}(OH)_{2x}$, where x = 0 - 3.

3. Foamable composition according to one of the preceding claims, wherein the hydroxyl-functionalized olefin comonomer is a $C_3$-$C_{11}$ alpha olefin monomer with one or multiple OH functional groups, preferably 3-buten-1-ol or 5-hexen-1-ol, or wherein the hydroxyl-functionalized olefin comonomer is a $C_5$-$C_{11}$ cyclic olefin, preferably 5-norbornene-2-ol, 5-norbomene-2-methanol, 5-norbomene-2,3-dimethanol.

4. Foamable composition according to one of the preceding claims, wherein the composition comprises a third olefin monomer selected from the list comprising $C_2$-$C_{11}$ alpha olefin monomers or $C_5$-$C_{11}$ cyclic olefin monomers.

5. Foamable composition according to one of the preceding claims, wherein binding agent is aluminum oxide and/or hydroxide, [$Al_2O_{3-x}(OH)_{2x}$] where x = 0 - 3).

6. Foamable composition according to one of the preceding claims, wherein the amount of binding agent is from 0.4 wt% to 30 wt%, preferably 0.8 wt% to 20 wt%, more preferably 1.2 wt% to 15 wt% of the composition.

7. Foamable hydroxyl-functionalized polyolefin resin comprising an ethylene- or propylene-based copolymer or a terpolymer, with pending hydroxyl functional groups in which preferably the amount of hydroxyl functionalities within the resin is from 0.1 to 2.5 mol% -as determined by comparing the $^1$H NMR integral of the $\underline{CH_2}$OH next to the hydroxyl with respect to the other $\underline{CH_2}$ groups or $\underline{CH}$ groups in the polymer- and a binding agent preferably selected from the list comprising metal hydroxides, metal oxides, metal carbonates, metal nitrates, metal phosphates, metal sulphates, and metal silicates or their partially hydroxylated or hydrated products, preferably metal is from the groups 1, 2, 12 or 13 of the periodic table, more preferably the binding agent is aluminum oxide hydroxide $Al_2O_{3-x}(OH)_{2x}$, where x = 0 - 3.

8. Foamable hydroxyl-functionalized polyolefin resin according claim 7, wherein it has been produced by a solution process in which a metal alkyl-based protective agent has been used, wherein the binding agent within the composition is a metal residues from the metal alkyl-based protective agent.

9. Foamed article comprising a polymerized foamable composition according to one of the claims 1 to 6 or a foamable hydroxyl-functionalized polyolefin resin according to claim 7 or 8.

10. Blend of isotactic polypropylene with foamable composition according to one of the claims 1 to 6 or a foamable hydroxyl-functionalized polyolefin resin according to claim 7 or 8.

11. Blend of random polypropylene with foamable composition according to one of the claims 1 to 6 or a foamable hydroxyl-functionalized polyolefin resin according to claim 7 or 8.

12. Blend of high density polyethylene (HOPE) with foamable composition according to one of the claims 1 to 6 or a foamable hydroxyl-functionalized polyolefin resin according to claim 7 or 8.

13. Blend of linear low density polyethylene (LLDPE) with foamable composition according to one of the claims 1 to 6 or a foamable hydroxyl-functionalized polyolefin resin according to claim 7 or 8.

14. Use of a foamable composition according to one of the claims 1 to 6 or a foamable hydroxyl-functionalized polyolefin resin according to claim 7 or 8 for the making of a foamed article,

Figure 1

Figure 2

Figure 3a

Figure 3b

Europäisches
Patentamt

European
Patent Office

Office européen
des brevets

# EUROPEAN SEARCH REPORT

Application Number

EP 20 00 0487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 116 780 A (CHINA PETROLEUM & CHEM CORP ET AL.) 8 May 2020 (2020-05-08) * claim 10; examples * | 1-14 | INV. C08J9/00 C08F210/06 C08J9/14 |
| X,D | WO 2019/122458 A1 (SABIC GLOBAL TECHNOLOGIES BV [NL]) 27 June 2019 (2019-06-27) * examples * | 1,7 | |
| A | US 2016/280810 A1 (WANG PING-WEN [TW] ET AL) 29 September 2016 (2016-09-29) * the whole document * | 1-14 | |
| A | US 2020/270432 A1 (KUMMER KYLE G [US] ET AL) 27 August 2020 (2020-08-27) * the whole document * | 1-14 | |

**TECHNICAL FIELDS SEARCHED (IPC)**

C08J
C08F

The present search report has been drawn up for all claims

| Place of search | Date of completion of the search | Examiner |
|---|---|---|
| The Hague | 30 April 2021 | Rinkel, Bert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 20 00 0487

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2021

| Patent document cited in search report | | Publication date | Patent family member(s) | | Publication date |
|---|---|---|---|---|---|
| CN 111116780 | A | 08-05-2020 | NONE | | |
| WO 2019122458 | A1 | 27-06-2019 | CN | 111491955 A | 04-08-2020 |
| | | | CN | 111491956 A | 04-08-2020 |
| | | | CN | 111491957 A | 04-08-2020 |
| | | | CN | 111491958 A | 04-08-2020 |
| | | | CN | 111511785 A | 07-08-2020 |
| | | | CN | 111511786 A | 07-08-2020 |
| | | | EP | 3728345 A1 | 28-10-2020 |
| | | | EP | 3728346 A1 | 28-10-2020 |
| | | | EP | 3728347 A1 | 28-10-2020 |
| | | | EP | 3728348 A1 | 28-10-2020 |
| | | | EP | 3728351 A1 | 28-10-2020 |
| | | | EP | 3728352 A1 | 28-10-2020 |
| | | | US | 2021087304 A1 | 25-03-2021 |
| | | | US | 2021087310 A1 | 25-03-2021 |
| | | | US | 2021087312 A1 | 25-03-2021 |
| | | | US | 2021087313 A1 | 25-03-2021 |
| | | | WO | 2019122453 A1 | 27-06-2019 |
| | | | WO | 2019122456 A1 | 27-06-2019 |
| | | | WO | 2019122457 A1 | 27-06-2019 |
| | | | WO | 2019122458 A1 | 27-06-2019 |
| | | | WO | 2019122459 A1 | 27-06-2019 |
| US 2016280810 | A1 | 29-09-2016 | TW | 201634486 A | 01-10-2016 |
| | | | US | 2016280810 A1 | 29-09-2016 |
| US 2020270432 | A1 | 27-08-2020 | BR | 112018011907 A2 | 27-11-2018 |
| | | | CN | 108633280 A | 09-10-2018 |
| | | | EP | 3390475 A1 | 24-10-2018 |
| | | | JP | 2019500452 A | 10-01-2019 |
| | | | KR | 20180093011 A | 20-08-2018 |
| | | | SG | 11201804897S A | 30-07-2018 |
| | | | TW | 201739819 A | 16-11-2017 |
| | | | US | 2020270432 A1 | 27-08-2020 |
| | | | WO | 2017106166 A1 | 22-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019122458 A1

**Non-patent literature cited in the description**

- **S.B. BROWN.** *Reactive Extrusion,* 1992
- *Ind. Eng. Chem. Res.,* 2016, vol. 55, 11970-11982